# EUROPÄISCHE PATENTSCHRIFT

(11) **EP 2 875 628 B1**
(45) Veröffentlichungstag und Bekanntmachung des Hinweises auf die Patenterteilung: **14.10.2020**
(21) Anmeldenummer: 14747510.7
(22) Anmeldetag: 16.06.2014
(51) Int. Cl.: H04M 3/42, H04M 1/725, H04M 1/677, H04M 3/44

(54) **VERFAHREN UND VORRICHTUNG ZUR KOMMUNIKATION**
METHOD AND DEVICE FOR COMMUNICATING
PROCEDE ET DISPOSITIF DE COMMUNICATION

(30) Priorität: 14.06.2013 DE 102013211146
(43) Veröffentlichungstag der Anmeldung: 27.05.2015
(73) Patentinhaber: SUSI & James GmbH, 68167 Mannheim (DE)
(72) Erfinder: Mossler, Jonas Carl, 68167 Mannheim (DE); Ganter, Axel, 68169 Mannheim (DE)
(74) Vertreter: Patent- und Rechtsanwälte Ullrich & Naumann
(86) Internationale Anmeldenummer: PCT/DE2014/200262
(87) Internationale Veröffentlichungsnummer: WO 2014/198272

(56) Entgegenhaltungen:
- US-A- 6 035 217
- US-A1- 2002 152 071
- US-A1- 2003 200 195
- US-A1- 2009 143 103
- US-B1- 6 792 291

## Beschreibung

Die vorliegende Erfindung betrifft ein Verfahren und eine Vorrichtung zur Kommunikation mit einem einem Benutzer zur Verfügung stehenden Endgerät, umfassend ein Display, ggf. eine Kamera und eine Sprach-Eingabe-/Ausgabeeinheit, wobei das Endgerät in ein Netzwerk zur dortigen Teilnahme integrierbar ist und mit einer Zentrale kommunizieren kann und über die Zentrale steuerbar ist, und wobei die Zentrale eine Kommunikation zwischen dem Benutzer und beliebigen Dritten mittelbar und/oder unmittelbar bewerkstelligt.

Die vorliegende Erfindung beschäftigt sich ganz allgemein mit einem Verfahren und einer Vorrichtung zur Kommunikation, wie sie hinlänglich aus der Praxis bekannt sind. Regelmäßig erfolgt die Kommunikation der hier in Rede stehenden Art über das Internet.

Bekannte Verfahren und Vorrichtungen sind nachteilig dahingehend, dass die Kommunikation durch ungeübte Personen, insbesondere ältere Menschen, schwierig zu realisieren ist, nämlich in Ermangelung einschlägiger Kenntnisse auf dem Gebiet der Nutzung EDV-spezifischer Gerätschaften. Insbesondere ältere Menschen haben häufig Angst vor der vermeintlichen Komplexität der Technik, wodurch ihnen der Zugang zu modernen Kommunikationstechnologien und anderen EDV-basierten Gerätschaften und Dienstleistungen verwehrt bleibt. US6035217 ist ein Beispiel für eine Methode und Anordnung für ältere Menschen, bei der ein einziger Tastendruck für die Eingabe eines Sprachbefehls zum Anrufen eines anderen Teilnehmers verwendet werden kann.

Der vorliegenden Erfindung liegt daher die Aufgabe zugrunde, die Kommunikation, insbesondere über das Internet, zu vereinfachen und sie auch für unkundige und ältere Menschen zu ermöglichen.

Erfindungsgemäß wird die voranstehende Aufgabe durch die Merkmale der nebengeordneten Ansprüche 1 und 7 gelöst, nämlich sowohl durch ein Verfahren als auch durch eine Vorrichtung, die die Kommunikation vereinfacht.

In erfindungsgemäßer Weise ist erkannt worden, dass es von ganz besonderem Vorteil ist, dem Benutzer eine vereinfachte Kommunikationsmöglichkeit an die Hand zu geben, nämlich durch ein sehr einfaches Endgerät der Datenkommunikation, welches im einfachsten Falle neben der zur Kommunikation erforderlichen technischen Ausstattung lediglich ein Display umfasst. Ggf. kann das Endgerät ein Bedienfeld bzw. einen Bedienknopf, eine Kamera und/oder eine Sprach-Eingabe-/Ausgabeeinheit aufweisen. Das Endgerät ist in ein Netzwerk zur dortigen Teilnahme integrierbar, beispielsweise dem Internet. Mit dem Endgerät wird eine Verbindung mit einer Zentrale hergestellt, mit der der Benutzer kommunizieren kann. Die Zentrale kann wiederum mit Dritten kommunizieren und stellt somit die ansonsten über das Internet nur kompliziert erreichbare Kommunikation zwischen dem Benutzer und den Dritten her. In die andere Richtung erfolgt die Kommunikation seitens Dritter über die Zentrale mit dem Benutzer, wobei die Zentrale das Endgerät des Benutzers steuert, entsprechende Sprach-, Schrift- und/oder Bildinformationen dem Benutzer vermitteln kann, ggf. unter Zugrundelegung weiterer Sprachinformationen, so dass das Endgerät einerseits als Eingabegerät zur Kommunikation mit der Zentrale und andererseits als Ausgabegerät für Informationen dient.

Bei der Kommunikation mit beliebigen Dritten kann es sich beispielsweise um Text-, Sprach- und/oder Video-Telefonie handeln. Auch denkbar ist das Abrufen und die Ausgabe von Text-, Sprach- und Bildinformationen aus dem Angebot Dritter vorzugsweise über das Internet oder aus einem über das Netzwerk erreichbaren Speichermedium.

In anderen Worten muss der Benutzer lediglich über das Endgerät mit der Zentrale Kontakt aufnehmen um an moderner Kommunikation bzw. Kommunikationstechnologie teilnehmen zu können.

Folglich sind mit dem erfindungsgemäßen Verfahren und mit der erfindungsgemäßen Vorrichtung ein Verfahren und eine Vorrichtung realisiert, die die Kommunikation, insbesondere über das Internet, vereinfachen und sie auch für unkundige und ältere Menschen ermöglichen.

In vorteilhafter Weise ist das Endgerät über ein einziges Betätigungselement, vorzugsweise über eine Betätigungstaste, aktivierbar und dadurch die Zentrale kontaktierbar. Denkbar ist ein Gehäuse mit einer einzigen Betätigungstaste mit dem einzigen Zweck mit nur einem einzigen Betätigungsvorgang - beispielsweise dem Drücken der Betätigungstaste - die Zentrale zu Kontaktieren und so Assistenz der Zentrale zu erlangen. Dadurch wird die Komplexität für den Nutzer auf ein Minimum reduziert. Ebenfalls denkbar ist die Integrierung des Betätigungselements an eine Armbanduhr, einem Armband, einem Anhänger, einem Haus-oder Mobiltelefon, einem anderen beliebigen elektrischen/elektronischem Gerät und/oder einem Kraftfahrzeug. Smartphones und andere Systeme können über ein entsprechendes Anwendungsprogramm aufgerüstet werden, um als Endgerät bzw. Betätigungselement zu dienen.

Ebenso ist es denkbar, dass das Endgerät und/oder das Betätigungselement einen Signalgeber aufweist/aufweisen, um dem Benutzer zu signalisieren, dass für ihn Informationen - welcher Art auch immer - zur Verfügung stehen und durch die Betätigung des Betätigungselements abrufbar sind. Bei dem Signalgeber kann es sich beispielsweise um ein Lichtelement aufweisen, welches blinkt oder leuchtet.

Von besonderem Vorteil ist es, wenn die Kommunikation zwischen dem Benutzer und der Zentrale über Sprache erfolgt. Ist das Endgerät aktiviert, die Zentrale kontaktiert und eine Verbindung zwischen Benutzer und Zentrale hergestellt, kann der Benutzer sein Anliegen mündlich vortragen. Auch eine Sprachausgabe der Zentrale zum gegenseitigen Dialog ist denkbar, beispielsweise wenn eine Sprach-eingabe des Benutzers nicht erkannt wurde.

Dabei kann die Kommunikation zwischen dem Benutzer und der Zentrale über die Sprach-Ein- und Ausgabeeinheit des Endgerätes und/oder über Telefon erfolgen. Beispielsweise kann der Benutzer die Zentrale über das Endgerät bzw. über das Betätigungselement kontaktieren und wird daraufhin von der Zentrale telefonisch angerufen, um eine Spracheingabe zu tätigen oder ggf. mit der Zentrale in einen gegenseitigen Dialog zu treten.

In besonders vorteilhafter Weise erfolgt die Erkennung der Spracheingabe des Benutzers über eine automatische Spracherkennung und sind Steuerbefehle automatisch ausführbar. Entsprechende Spracherkennungssysteme sind hinlänglich bekannt.

Problematisch bei bekannten Sprachsteuerungen ist jedoch, dass sie aufgrund von äußerst eingeschränkten und nicht-personalisierten Sprachmodellen schwierig zu bedienen sind. Schlägt die Spracherkennung fehl, kann der gewünschte Befehl nicht ausgeführt werden oder muss der Benutzer die Steuerung selbst ausführen. Gerade solche Komplikationen schrecken insbesondere ungeschulte und ältere Menschen davor ab solche Geräte und Systeme zu nutzen.

Dieses Problem kann im Falle des Fehlschlagens einer automatischen Spracherkennung in vorteilhafter Weise durch eine hybride Sprachsteuerung vermieden werden. In diesem Falle kann ein menschlicher Operator, vorzugsweise eines Callcenters, hinzu geschaltet werden, der ggf. mit dem Benutzer in einen Dialog tritt und den entsprechenden Steuerbefehl manuell eingibt. Dies gewährleistet dem Benutzer die Sicherheit, dass sein Anliegen in jedem Fall verstanden und aus seiner Spracheingabe ein Befehl ausgeführt wird. Der Mensch bzw. der Operator dient somit als Rückfalllösung und ermöglicht höchste Zuverlässigkeit des Systems und Komfort.

In idealerweise erlernt ein Spracherkennungssystem durch die manuelle Eingabe kontinuierlich neue Sprachmodelle und verknüpft diese mit entsprechenden Steuerbefehlen.

Bei den Informationen, die der Benutzer anfragt und die dem Benutzer präsentiert werden, kann es sich um beliebige Informationen wie Text- und/oder Sprach-und/oder Bildinformationen handeln, die von Dritten Netzteilnehmern angeboten werden oder in verfügbaren Speichermedien abrufbar sind. Grundsätzlich kann der Service der Zentrale als eine Art Concierge oder auch persönlicher Assistenz-Service verstanden werden. Viele weitere Anwendungs- und Dienstleistungsbereiche sind denkbar, wie Büroassistenz, Erinnerungsservice, Übersetzung, Recherche, Ratgeber ect. Schlägt die automatische Befehlsausführung fehl, kann ein Operator einspringen und ggf. als Vermittler weitere fachspezifische Agenten zu bestimmten Themen anfragen, wie beispielsweise einen Übersetzer bei Fehlschlag einer automatischen Übersetzung oder einen medizinischen Betreuer im Bereich der Telemedizin. Über Mobiltelefon und/oder mit GPS lässt sich das erfindungsgemäße Verfahren auch ortsunabhängig nutzen.

Besonders vorteilhaft ist es, wenn das Endgerät vorzugsweise kontaktlos mit beliebigen Haushalts-, Unterhaltungs- und Kommunikationsgeräten, insbesondere elektronischen Geräten, koppelbar ist, so dass diesbezügliche Parameter an die Zentrale übertragbar sind. Auf diese Weise lassen sich die Geräte über die Zentrale überprüfen und/oder steuern. Dabei kann es sich beispielsweise um den Fernseher handeln, über den dem Benutzer Text-, Bild-, Ton- und andere Informationen präsentiert werden. Ebenso können beliebige Dritte ein digitales Fotoalbum an den Benutzer senden und dieser die Fotos auf dem Fernseher ansehen.

Auch können Haushaltsgeräte und Hausanlagen von Dritten über die Zentrale gewartet und abgelesen werden. Hierbei kann das Endgerät als Gateway zum Ablesen von Haustechnik und Sensordaten im Bereich der AAL-Technik dienen, zu denen Dritte über die Zentrale Zugriff erhalten oder an diese übermittelt werden. Intelligente Fernwartung ist ebenfalls denkbar. Die Möglichkeiten sind vielseitig und nahezu unbegrenzt, ohne dass der Benutzer über besondere Kenntnisse zur Nutzung solcher Geräte und des Netzwerks verfügen muss. Wichtig ist jedoch, dass sich das erfindungsgemäße Verfahren nicht auf Fernwartung und Fernsteuersysteme beschränkt, sondern vielmehr bidirektionale Kommunikation ermöglicht.

Eine Vorrichtung zur Kommunikation mit einem einem Benutzer zur Verfügung stehenden Endgerät, insbesondere unter Nutzung des Verfahrens nach einem der Ansprüche 1 bis 9, ist mit dem Anspruch 10 beansprucht. Sie weist ein Endgerät der Datenkommunikation, ein Display, ggf. eine Kamera und eine Sprach-Eingabe-/Ausgabeeinheit, eine Zentrale mit einem Prozessor, Mitteln zur Datenspeicherung und einer Daten-Eingabe-/Ausgabeeinheit, insbesondere mit einem Display, auf, wobei die Zentrale mit dem Benutzer bzw. den Benutzern vorzugsweise über das Internet kommunizieren kann und wobei die Zentrale vorzugsweise über das Internet eine Kommunikation zwischen beliebigen dritten Teilnehmern am Internet und dem Benutzer mittelbar und/oder unmittelbar herstellt, dergestalt, dass der Benutzer vorzugsweise über die Zentrale mit den Dritten kommuniziert.

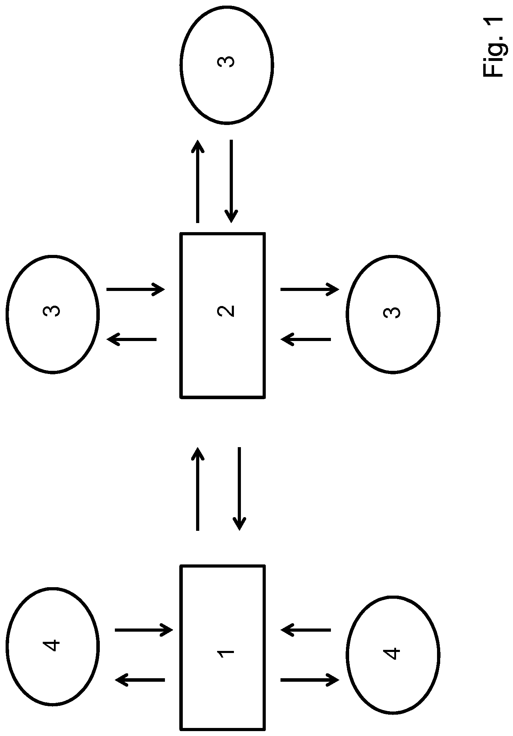

Es gibt verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiel der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung das Wirkprinzip des erfindungsgemäßen Verfahrens nebst erfindungsgemäßer Vorrichtung, wobei es sich bei der Vorrichtung um ein System handelt,
- Fig. 1: in einer schematischen Darstellung den Ablauf eines herkömmlichen Spracherkennungssystems,
- Fig. 3: in einer schematischen Darstellung den Ablauf einer hybriden Spracherkennung.

Fig. 1 zeigt in einer schematischen Darstellung das Wirkprinzip des erfindungsgemäßen Verfahrens nebst dem System einer erfindungsgemäßer Vorrichtung. Dem Benutzer wird ein Endgerät 1 zur Verfügung gestellt, welches bspw. über WLAN ins Internet eingeloggt ist. Bei dem Endgerät 1 handelt es sich um ein stark reduziertes Endgerät mit einem Display und einer Sprach-Eingabe- und Ausgabeeinheit. Mittels eines Betätigungselements in Form eines Gehäuses mit einer einzigen Betätigungstaste kann der Benutzer die Zentrale 2 kontaktieren, woraufhin die Zentrale den Benutzer per Telefon anruft, um über Sprache sein Anliegen zu erfahren. Ebenfalls denkbar ist eine Kommunikation über die Sprach-Eingabe- und Ausgabeeinheit am Endgerät 1. Wesentlich ist, dass der Benutzer lediglich die Betätigungstaste drücken muss um die Zentrale zu kontaktieren, die daraufhin bei ihm anruft und je nach Wunsch dessen Geräte fernsteuern und Angebote Dritter anzeigen und/oder weitere Dienstleistungen ausführen kann.

Das Betätigungselement, welches einen einzigen Betätigungsknopf aufweist, umfasst des Weiteren ein Lichtelement, beispielsweise integriert in den Betätigungsknopf. Hat die Zentrale ein Anliegen an den Benutzer zu richten, beispielsweise einen verpassten Anruf, eine eingegangene E-Mail, das Ergebnis einer Dienstleistung oder ist eine Wartung eines mit dem Endgerät angeschlossenen Gerätes fällig, so wird dies durch Leuchten oder Blinken des Lichtelements dem Benutzer signalisiert. Dieser kann - wann immer er möchte - durch Knopfdruck des Betätigungsknopfes die Zentrale kontaktieren, um zu erfahren worum es sich handelt und ggf. Ergebnisse präsentiert zu bekommen.

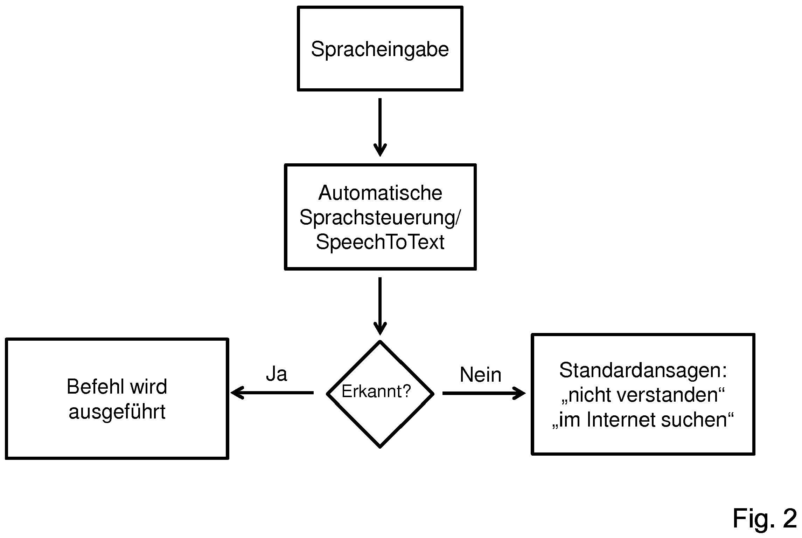

Die Zentrale 2 verfügt über eine automatische Spracherkennung und kann somit Steuerbefehle automatisch ausführen. Wie in Fig. 2 gezeigt, scheitern herkömmliche Sprachsteuerungen allerdings, sobald ein Sprachbefehl nicht erkannt wird. Daraufhin erfolgt meist eine Fehlermeldung, beispielsweise in Form einer Standardansage, wie "nicht verstanden". Dem Benutzer bleibt nichts anderes übrig, als die Spracheingabe so oft zu wiederholen, bis sie erkannt wird oder den Befehl selbst manuell auszuführen. Gerade dies gilt es für unkundige und ältere Menschen zu vermeiden.

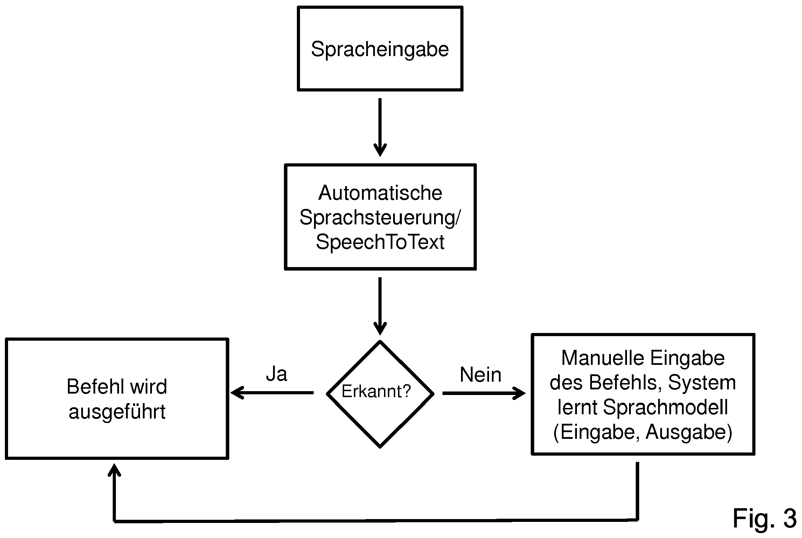

Fig. 3 zeigt den Ablauf einer hybriden Spracherkennung, bei der eine automatische Spracherkennung mit einem menschlichen Operator verbunden wird. Im Falle, dass das Anliegen des Benutzer nicht durch die automatische Spracherkennung erkannt wird, wird ein menschlicher Operator in einem Callcenter eingeschaltet, der den entsprechenden Befehl manuell eingibt und ggf. mit dem Benutzer in einen Dialog tritt. Auf diese Weise erlernt das Spracherkennungssystem der Zentrale 2 kontinuierlich neue Sprachmodelle. Auch ein Speichern bzw. Erlernen von Dialekten und undeutlicher Aussprache kann auf diese Weise zu einem gewissen Grad erfasst, zumindest jedoch in diesem Moment erkannt werden. Wesentlich ist jedenfalls, dass sich der Benutzer auf die Zentrale verlassen kann und keine Angst davor habe muss, dass das System ihn nicht versteht und daher nicht funktioniert.

Der Benutzer kommuniziert ausschließlich mit der Zentrale, die wiederum mit Dritten 3 beliebig kommunizieren kann (Fig. 1). Jedwede Informationen erhält der Benutzer ausschließlich über die Zentrale 2, dargestellt über das Endgerät 1 bzw. die damit mögliche Telefonie oder weiteren verbundenen Geräten. So kann sich der Benutzer beispielsweise durch die Zentrale 2 mit Dritten verbinden und ein Videogespräch aufbauen lassen. Umgekehrt können sich Dritte von der Zentrale 2 mit dem Benutzer verbinden lassen. Der Benutzer kann sich auch Inhalte von Websites oder Suchergebnisse zu einem bestimmten Thema auf seinem Display anzeigen, an seinem Endgerät abspielen oder gar vorlesen lassen. Auch weitere Dienstleistungen von Seiten der Zentrale 2 sind denkbar, wie beispielsweise das Übersetzen von Texten und Sprachdateien oder das Schreiben von Texten. So könnte der Benutzer eine E-Mail diktieren und den Text in Echtzeit an seinem Display verfolgen. Auf diese Weise werden einem ungeschulten oder älteren Menschen moderne Kommunikationstechnologien zugänglich.

Außerdem ist es möglich, dass das Endgerät 1 an beliebige elektrische/elektronische Geräte 4 im Haushalt, vorzugsweise über eine Infrarot-Schnittstelle oder über Funk, ankoppelt, so dass die Zentrale 2, direkt oder wiederum über die Dritten 3, beliebige Geräte steuern, inspizieren, kontrollieren oder sogar eine Fehlersuche und/oder Wartung durchführen kann.

Zusammenfassend sei ausgeführt, dass mit dem erfindungsgemäßen Verfahren und der erfindungsgemäßen Vorrichtung bzw. dem erfindungsgemäßen System eine vereinfachte Möglichkeit angegeben wird, mit der nicht EDV-kundige Dritte den Vorteil des Internets nutzen können, ohne die dort komplexe Anwendung zu beherrschen. Dies erfolgt unter Zwischenschaltung einer Zentrale, die neben einer automatisierten Spracherkennung vorzugsweise durch einen Menschen im Sinne eines Callcenters besetzt ist, so dass der Benutzer über das Endgerät 1 ausschließlich mit der Zentrale 2 kommuniziert und die Zentrale 2 jedwede Verbindung mit Dritten 3 aufbaut, hält bzw. sucht oder auch die Ergebnisse anderer Dienstleistungen dem Benutzer präsentiert. Dem Benutzer wird somit eine sehr einfache Möglichkeit zur Kommunikation mit der Umwelt zur Verfügung gestellt, unter Nutzung modernster Technologien, ohne diese beherrschen zu müssen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Endgerät
- 2: Zentrale
- 3: Dritte
- 4: elektrisches/elektronisches Gerät

## Patentansprüche

1. Verfahren zur Kommunikation mit einem einem Benutzer zur Verfügung stehenden Endgerät (1), umfassend ein Display, ggf. eine Kamera und eine Sprach-Eingabe-/Ausgabeeinheit, wobei das Endgerät (1) in ein Netzwerk zur dortigen Teilnahme integrierbar ist und mit einer Zentrale (2) kommunizieren kann und über die Zentrale (2) steuerbar ist, und wobei die Zentrale (2) eine Kommunikation zwischen dem Benutzer und beliebigen Dritten (3) bewerkstelligt, wobei die Kommunikation zwischen dem Benutzer und der Zentrale (2) über Sprachbefehle erfolgt, **dadurch gekennzeichnet, dass** im Falle des Fehlschlagens einer automatischen Spracherkennung eine manuelle Spracherkennung und Befehlsausführung durch einen hinzugeschalteten menschlichen Operator realisierbar ist, der mit dem Benutzer in einen Dialog tritt und einen Steuerbefehl manuell eingibt, und dass durch die manuelle Eingabe in ein Spracherkennungssystem kontinuierlich neue Sprachmodelle erlernbar und mit entsprechenden Steuerbefehlen verknüpfbar sind.

2. Verfahren nach Anspruch 1, **dadurch gekennzeichnet, dass** das Endgerät (1) über ein einziges Betätigungselement, vorzugsweise über eine Betätigungstaste, aktivierbar und dadurch die Zentrale (2) kontaktierbar ist.

3. Verfahren nach Anspruch 2, **dadurch gekennzeichnet, dass** die Kommunikation zwischen dem Benutzer und der Zentrale (2) über die Sprach-Ein- und Ausgabeeinheit des Endgerätes und/oder über Telefon erfolgt.

4. Verfahren nach Anspruch 2 oder 3, **dadurch gekennzeichnet, dass** die Erkennung der Spracheingaben des Benutzers über eine automatische Spracherkennung erfolgt und Steuerbefehle automatisch ausführbar sind.

5. Verfahren nach einem der Ansprüche 1 bis 4, **dadurch gekennzeichnet, dass** die Zentrale (2) dem Benutzer Inhalte Angebote Dritter (3) und/oder Ergebnisse einer Dienstleistung, insbesondere Sprach- und/oder Bild- und/oder Videoinformationen, zur Verfügung stellt.

6. Verfahren nach einem der Ansprüche 1 bis 5, **dadurch gekennzeichnet, dass** das Endgerät (1) vorzugsweise kontaktlos mit beliebigen Haushalts-, Unterhaltungs-und Kommunikationsgeräten (4), insbesondere elektronischen Geräten, koppelbar und diesbezügliche Parameter an die Zentrale (2) übertragbar ist/sind und dass die Geräte ggf. von dort überprüfbar und/oder steuerbar sind.

7. Vorrichtung zur Kommunikation mit einem einem Benutzer zur Verfügung stehenden Endgerät (1), insbesondere unter Nutzung des Verfahrens nach einem der Ansprüche 1 bis 6, mit einem Endgerät (1) der Datenkommunikation, umfassend ein Display, ggf. eine Kamera und eine Sprach-Eingabe-/Ausgabeeinheit, eine Zentrale (2) mit einem Prozessor, Mitteln zur Datenspeicherung und einer Daten-Eingabe-/Ausgabeeinheit, insbesondere mit einem Display, wobei die Zentrale 2 mit dem Benutzer bzw. den Benutzern vorzugsweise über das Internet kommunizieren kann und wobei die Zentrale (2) vorzugsweise über das Internet eine Kommunikation zwischen beliebigen dritten Teilnehmern (3) am Internet und dem Benutzer herstellt, dergestalt, dass der Benutzer vorzugsweise über die Zentrale (2) mit dem oder den Dritten (3) kommuniziert, wobei die Kommunikation zwischen dem Benutzer und der Zentrale (2) über Sprachbefehle erfolgt, **dadurch gekennzeichnet, dass** im Falle des Fehlschlagens einer automatischen Spracherkennung eine manuelle Spracherkennung und Befehlsausführung durch einen hinzugeschalteten menschlichen Operator realisierbar ist, der mit dem Benutzer in einen Dialog tritt und einen Steuerbefehl manuell eingibt, und dass durch die manuelle Eingabe in ein Spracherkennungssystem kontinuierlich neue Sprachmodelle erlernbar und mit entsprechenden Steuerbefehlen verknüpfbar sind.

## Claims

1. Method for communicating with a terminal (1) which is available to a user, comprising a display, where applicable a camera and a speech input/output unit, wherein the terminal (1) can be integrated in a network for local participation and can communicate with a control centre (2) and can be controlled via the control centre (2), and wherein the control centre (2) brings about a communication between the user and any third parties (3), wherein the communication between the user and the control centre (2) is carried out by means of voice commands, **characterised in that**, in the event of the failure of automatic speech recognition, manual speech recognition and instruction execution can be carried out by a connected human operator who enters into a dialogue with the user and who manually enters a control instruction, and **in that**, as a result of the manual input into a speech recognition system, new speech models can be continuously learned and can be linked with corresponding control instructions.

2. Method according to claim 1, **characterised in that** the terminal can be activated by means of a single actuation element, preferably by means of an actuation button, and the control centre (2) can thereby be contacted.

3. Method according to claim 2, **characterised in that** the communication between the user and the control centre (2) is carried out via the speech input and output unit of the terminal and/or via the telephone.

4. Method according to claim 2 or claim 3, **characterised in that** the recognition of the speech inputs of the user is carried out by means of automatic speech recognition and control instructions can be carried out automatically.

5. Method according to any one of claims 1 to 4, **characterised in that** the control centre (2) provides the user with content, offers of third parties (3) and/or results of a service, in particular speech and/or image and/or video information.

6. Method according to any one of claims 1 to 5, **characterised in that** the terminal (1) can preferably be coupled in a contactless manner to any household, entertainment and communication devices (4), in particular electronic devices, and parameters in this regard can be transmitted to the control centre (2), and **in that** the devices can where applicable be verified and/or controlled from that location.

7. Device for communicating with a terminal (1) which is available to a user, in particular using the method according to any one of claims 1 to 6, having a terminal (1) of data communication, comprising a display, where applicable a camera and a speech input/output unit, a control centre (2) having a processor, data storage means and a data input/output unit, in particular having a display, wherein the control centre (2) can communicate with the user or users preferably via the internet and wherein the control centre (2) preferably via the internet produces a communication between any third-party participants (3) on the internet and the user in such a manner that the user preferably communicates via the control centre (2) with the third party or third parties (3), wherein the communication between the user and the control centre (2) is carried out by means of voice commands, **characterised in that**, in the event of the failure of automatic speech recognition, a manual speech recognition and instruction execution can be carried out by means of a connected human operator who enters into dialogue with the user and who manually inputs a control instruction, and **in that**, as a result of the manual input into a speech recognition system, new speech models can be continuously learned and linked with corresponding voice commands.

## Revendications

1. Procédé de communication avec un terminal (1) qui est à la disposition d'un utilisateur, comprenant un afficheur, éventuellement une caméra et une unité d'entrée/sortie vocale, le terminal (1) pouvant être intégré dans un réseau en vue de participer à celui-ci, et pouvant communiquer avec une centrale (2), et pouvant être commandé via la centrale (2), et la centrale (2) établissant une communication entre l'utilisateur et des tiers (3) quelconques, la communication entre l'utilisateur et la centrale (2) s'effectuant via des instructions vocales,
**caractérisé en ce que**, en cas d'échec d'une reconnaissance vocale automatique, une reconnaissance vocale manuelle et une exécution d'instructions peuvent être réalisées par un opérateur humain intervenant à titre supplémentaire qui entame un dialogue avec l'utilisateur et entre manuellement une instruction de commande, et **en ce que**, par l'entrée manuelle dans un système de reconnaissance vocale, de nouveaux modèles vocaux peuvent être appris de façon continue et être associés à des instructions de commande correspondantes.

2. Procédé selon la revendication 1, **caractérisé en ce que** le terminal (1) peut être activé par le biais d'un élément d'actionnement unique, de préférence par le biais d'une touche d'actionnement, et la centrale (2) peut de ce fait être contactée.

3. Procédé selon la revendication 2, **caractérisé en ce que** la communication entre l'utilisateur et la centrale (2) s'effectue par le biais de l'unité d'entrée/sortie vocale du terminal et/ou via le téléphone.

4. Procédé selon la revendication 2 ou 3, **caractérisé en ce que** la reconnaissance des entrées vocales de l'utilisateur s'effectue par le biais d'une reconnaissance vocale automatique, et des instructions de commande peuvent être exécutées automatiquement.

5. Procédé selon l'une des revendications 1 à 4, **caractérisé en ce que** la centrale (2) met à disposition de l'utilisateur des contenus, des offres de tiers (3) et/ou des résultats d'une prestation de service, en particulier des informations vocales et/ou d'images et/ou de vidéos.

6. Procédé selon l'une des revendications 1 à 5, **caractérisé en ce que** le terminal (1) peut être couplé, de préférence sans contact, avec des appareils (4) ménagers, de divertissement et de communication quelconques, en particulier des appareils électroniques, et des paramètres qui s'y rapportent peuvent être transmis à la centrale (2), et **en ce que** les appareils peuvent éventuellement être vérifiés et/ou commandés à partir de là.

7. Dispositif de communication avec un terminal (1) qui est à la disposition d'un utilisateur, en particulier avec utilisation du procédé selon l'une des revendications 1 à 6, avec un terminal (1) de communication de données, comprenant un afficheur, éventuellement une caméra et une unité d'entrée/sortie vocale, une centrale (2) avec un processeur, des moyens de stockage de données et une unité d'entrée/sortie de données, en particulier avec un afficheur, la centrale (2) pouvant communiquer avec l'utilisateur ou respectivement les utilisateurs de préférence via internet, et la centrale (2) établissant, de préférence via internet, une communication entre des participants (3) tiers quelconques sur internet et l'utilisateur, de telle manière que l'utilisateur communique, de préférence via la centrale (2), avec le ou les tiers (3), la communication entre l'utilisateur et la centrale (2) s'effectuant via des instructions vocales, **caractérisé en ce que**, en cas d'échec d'une reconnaissance vocale automatique, une reconnaissance vocale manuelle et une exécution d'instructions pouvant être réalisées par un opérateur humain intervenant à titre supplémentaire qui entame un dialogue avec l'utilisateur et entre manuellement une instruction de commande, et **en ce que**, par l'entrée manuelle dans un système de reconnaissance vocale, de nouveaux modèles vocaux peuvent être appris de façon continue et être associés à des instructions de commande correspondantes.
